# EUROPEAN PATENT SPECIFICATION

(11) **EP 0 810 703 B1**
(45) Date of publication and mention of the grant of the patent: **31.10.2001**
(21) Application number: 97107709.4
(22) Date of filing: 12.05.1997
(51) Int. Cl.: H02B 1/30, H02B 1/40, E05D 7/12

(54) **Improvement in the assembly of door hinges in metal cabinets for electric apparatuses**
Verbesserung an Montagesatz für Metallschaltschranktürscharniere
Amélioration au montage des charnières de portes pour armoires électriques métalliques

(30) Priority: 30.05.1996 IT PN960024 U
(43) Date of publication of application: 03.12.1997
(73) Proprietor: Hager-Lumetal S.p.A., 33080 Porcia, Pordenone (IT)
(72) Inventor: Vendrametto, Maurizio, 33080 Porcia, Pordenone (IT); Dal Santo, Roberto, 33080 Roveredo in Piano, Pordenone (IT)
(74) Representative: Agostini, Agostino

(56) References cited:
- EP-A- 0 465 386
- GB-A- 2 192 666
- US-A- 5 088 155
- US-A- 5 193 308

## Description

### STATE OF THE ART

The present invention refers to a metal cabinet, in particular a cabinet for accomodating electric control and switching apparatuses, which is made up by structural component parts that can also be assembled directly on the site of installation, and is frontally closed by a door extending between two stanchions, having its hinges fastened to a first such stanchion, and abutting against the second such stanchion. Such a cabinet is known for example from EP-A-0 465 386.

It is a generally known and common practice to accomodate electric control and switching apparatuses, such as for instance those apparatuses needed in connection with power distribution systems in residential buildings or control and supervision systems associated to industrial plants, in metal cabinets made substantially in the shape of a parallelepipedon.

Cabinets of this kind are generally provided with two vertical stanchions and are most often closed frontally by at least a door. The hinges of such door are formed by metal brackets attached to one of said stanchions and provided with at least two aligned holes acting as receptacles for the hinging pins or gudgeons that co-operate with corresponding bushes attached to the door. It is a common practice for the hinges to be fastened by means of screws which are metric in presence of large-sized stanchions, so that the holes for the screws can be threaded, or associated self-clinching or similar nuts are used. The screws are on the contrary of the self-tapping type if the thickness of the stanchions is a reduced one. The use of metric screws, however, is uselessly expensive, while the use of self-tapping screws is scarcely suitable in all those cases in which the hinges have to be replaced, for instance in view of positioning them at a different height. Furthermore, when the cabinet is assembled directly on the site of the installation, the use of screws can cause the installer or fitter to run into some sort of inconveniences.

It is furthermore known from US-A-5 088 155 a door hinging system for a furniture cabinet consisting of a base plate fastened to the end face of the body of the cabinet unit with a screw and an intermediate plate attached to the door which is snap-in connected to the said base plate thanks to a spring made from a metal rod or wire. This construction is relatively complex due to the use of three separate structural parts (i. e. base plate, intermediate plate and spring) and retains the above mentioned inconveniences related to the use of screws.

### PURPOSES OF THE INVENTION

It is therefore a purpose of the present invention to improve the construction of metal cabinets of the above cited kind so as to facilitate the door assembly operation to the highest possible extent without any substantial increase in manufacturing costs. In particular the invention aims at a reduction of the parts used in the door hinging system.

### SHORT DESCRIPTION OF THE ACCOMPANYING DRAWINGS

The characteristics of the invention as recited in the appended claims enable this and further aims to be reached. Anyway, in order to enable the present invention to be more readily and clearly understood along with its characteristics and advantages, a detailed description of a preferred embodiment thereof will be given below by way of non-limiting example with reference to the accompanying drawings, in which:
- Figure 1 is a schematical, simplified overall view of a metal cabinet for accomodating electric apparatuses;
- Figure 2 is a perspective view of a hinge for the door of the above cited cabinet;
- Figures 3 and 4 are views, along a horizontal section, of the hinge shown in Figure 2 during and at the end of the operations for attaching it to one of the stanchions of the cabinet, respectively.

### DESCRIPTION OF A PREFERRED EMBODIMENT OF THE INVENTION

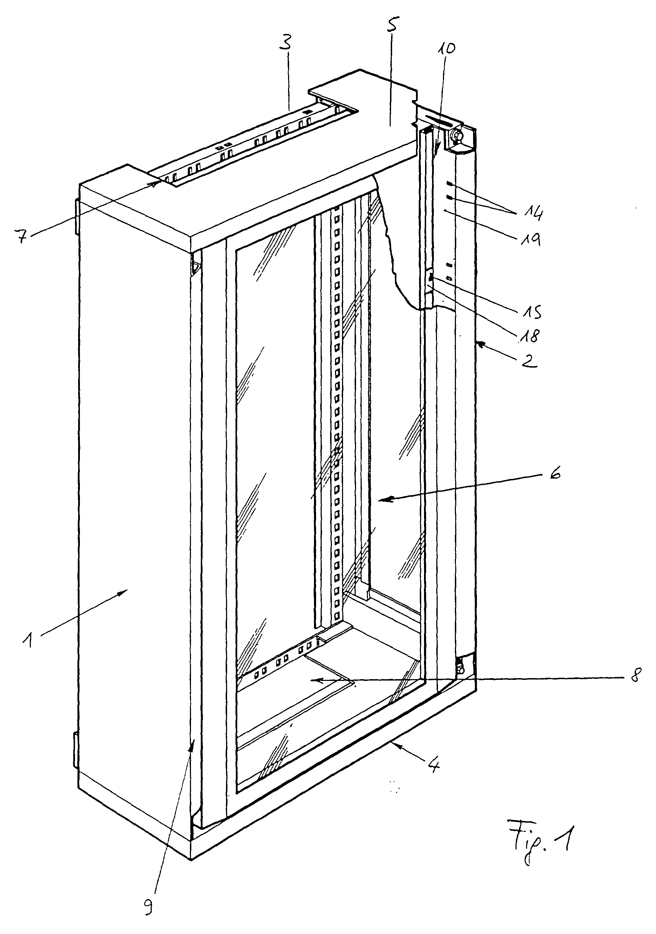

As shown in Figure 1, a metal cabinet adapted to contain electric control and switching apparatuses comprises a left-hand wall 1 and a right-hand wall 2, which are similar to each other, a back wall 3, a lower or bottom wall 4 and a top wall 5, which are similar to each other, too. All these walls are substantially formed by metal panels. The cabinet is completed by a front door 6. Not shown in the Figure are the electric apparatuses mounted in the cabinet, the appropriate means provided to support such apparatuses inside the cabinet, and the cable-entry strain-relief flange located in a slot 7 punched in the top wall 5, since such items do not have any relevance to the purpose of the present invention.

It should also be noticed that, if required, a cable-entry strain-relief flange may possibly be provided in a similar slot punched in the bottom wall 4 of the cabinet, instead of the shutting means shown at 8 in Figure 1.

The front sides of the metal panels forming the left-hand wall 1 and the right-hand wall 2 of the cabinet are folded longitudinally so as to form two stanchions 9 and 10, which are similar to each other, too. The hinges 20 of the door 6 are fixed on to the stanchion 10, as this will be better explained further on, while the stanchion 9 act as an abuttal for the same door to strike against.

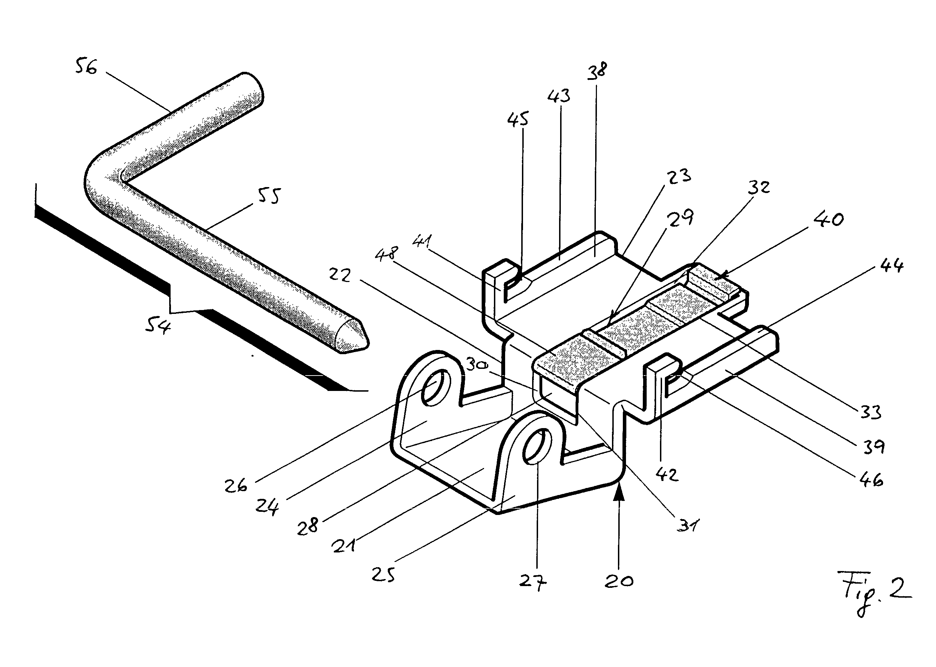

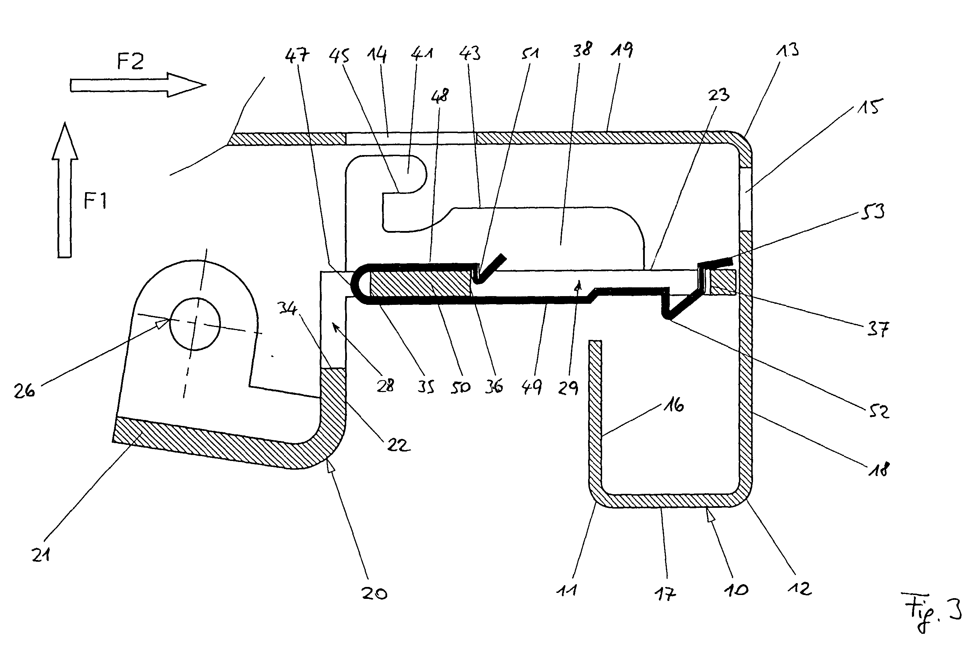

The stanchions, in particular the stanchion 10 shown also in Figures 2 and 3, have three folds, which are illustrated at 11, 12 and 13, respectively, and define four vertical surfaces 16, 17, 18 and 19. These surfaces are sequentially staggered by 90 degrees with respect to each other.

Along a whole first surface 19 of the stanchion 10 there is provided a set of apertures 14 which are grouped by pairs, are aligned vertically above each other, and are substantially rectangular in their shape. Along a whole second surface 18 of the stanchion 10, adjacent and perpendicular to the above mentioned first surface 19, there is provided a second set of apertures 15, which are also substantially rectangular in their shape, in such a manner that an aperture 15 is positioned between two apertures 14 provided in the other surface 19. The above mentioned apertures can be provided even during the assembly or installation of the cabinet, starting from engraved cut-offs provided there during the fabrication of the panel forming the stanchion. The function of these apertures shall anyway be better explained further on.

As this is best illustrated in Figure 2, a hinge, which is generally shopwn at 20, is substantially constituted by a rigid metal bracket having a Z-shaped configuration with two outer sides 21, 23 and a joining portion 22 which is approximately perpendicular to said sides 21 and 23.

From the free end portion of the first side 21, and perpendicularly to the plane in which the same side lies, there are protruding two ears 24 and 25 with openings 26 and 27 adapted to accomodate the elongated stem 55 of the attachment pin or gudgeon 54 of the hinge, said stem being adapted to be received in a bush (not shown) provided integrally with the door 6. The pin or gudgeon 54 further comprises a portion with a 90°-bend, generally shown at 56, to act as a retainer.

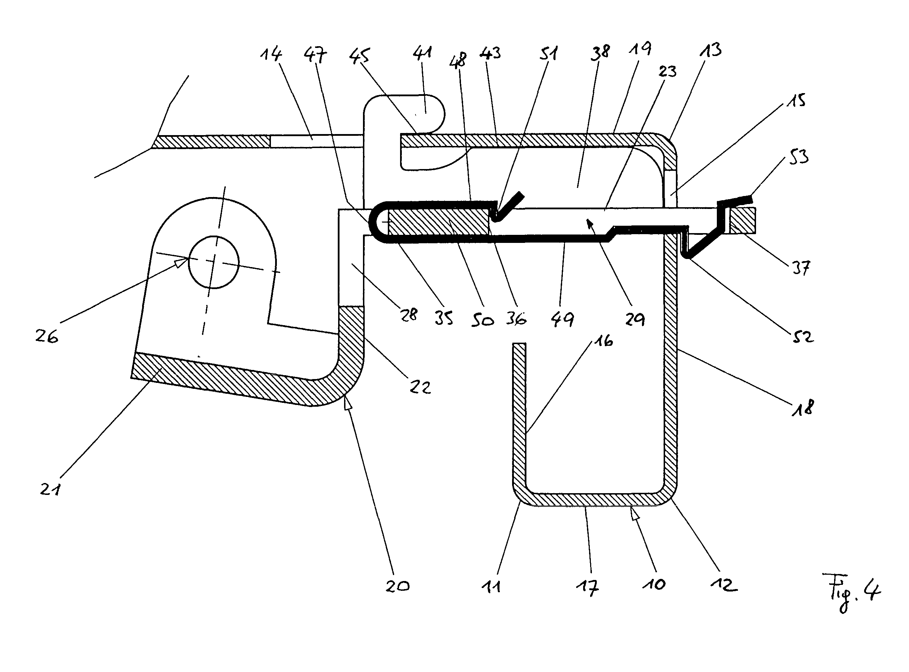

On the joining portion 22 and the second side 23 of the hinge 20 there are provided a first and a second rectangular slit 28 and 29, respectively, having the same width. The longitudinal edges of said slits 28 and 29 are generally shown at 30, 31 and 32, 33 (see Figure 2), respectively. The transverse edges of the slits 28 and 29 are shown at 34, 35 and 36, 37 (see Figures 3 and 4), respectively. These slits 28 and 29 are adapted to retain an elastic fastening strap 40, as this will be explained in greater detail further on.

From the third side 23 of the hinge 20, and perpendicularly to the plane on which it lays, there are protruding two tabs 38 and 39 extending parallelly to the longitudinal edges of the second slit 29, said two tabs terminating with appendixes 41 and 42, respectively, which are bent at an angle of 90° in the opposite direction with respect to the first side 21 of the hinge. The spacing between the outer contours 43, 44 of the appendixes 41, 42 and the inner contours 45, 46 of the appendixes 43, 44 is equal to or slightly smaller than the thickness of the stanchion 10.

The elastic fastening strap 50 is formed by a foil of harmonic or spring steel and comprises a first and a second portion 48 and 49 which are defined by a 180°-bend gripping around the upper trasverse edge 35 of the first slit 28.

The first portion 48 of the elastic fastening strap 40 extends over a face of the length 50 of the side 23 of the hinge 20 that is comprised between the slits 28 and 29, and terminates with a first trasverse bend 51 in the shape of a V. The fastening strap 40 is in this way able to remain attached to the inner trasverse edge 36 of the second slit 29. The second portion 49 of the elastic fastening strap 40 extends on the contrary over the whole opposite face of said side 23 of the hinge 20 and, after a second trasverse bend 52 in the shape of a V, terminates with a free edge 53 in the shape of a reverse L. As a result, the first portion 48 of the fastening strap 40 remains firmly linked to the hinge 20 thanks to the bend 47 and the V-shaped bend 51, whereas the second portion 49 remains merely resting one-sidedly against the free end of the side 23 of the hinge.

### HINGE ASSEMBLY SEQUENCE

Only the operations to be carried out in order to attach a hinge on to an already assembled cabinet will be described in the following with reference to Figures 3 and 4. The assembly of the door, with the insertion of the locking pin 53 in the openings 26 and 27 of the hinge 20 and the bush provided on the door is a totally conventional practice that is well-known to all those skilled in the art. In the case of very small doors, the possibility also exists to first complete the door and hinge assembly and then attach the hinges on to the stanchion of the cabinet.

The hinge 20, including the elastic fastening strap 40 thereof, is first of all approached to the cabinet and arranged thereon in such a position that its side 23 is substantially parallel to the surface 19 of the stanchion 10 and, namely, the appendixes 41 and 42 of the tabs 38 and 39 are brought to face a pair of the first set of apertures 14 provided in the same surface 19 (see Figure 3). The hinge 20 is then pushed in the direction shown by the arrow F1 until the outer contours 43 and 44 of the tabs 38 and 39 come into contact with the surface 19 and the L-bent edge 53 of the elastic fastening strap 40 is brought to face an aperture 15 in the surface 18. The hinge 20 is then pushed in the direction shown by the arrow F2: the end portion of its side 23 moves into the corresponding aperture 15 and the second portion 49 of the fastening strap 40 remains coupled to the stanchion 10 thanks to the undercut provided by said second V-shaped fold 52, after an instantaneous elastic deformation occurring when it climbs over the surface 18 of the stanchion 10. The same displacement of the hinge 20 in the direction shown by the arrow F2 causes the surface 19 of the stanchion 10 to be clamped between the inner contours 45, 46 of the appendixes 41, 42 on one side and, on the other side, between the outer contours 43, 44 of the tabs 38, 39 (see Figure 4). From the above description it clearly emerges that the attachment of the hinge 20 to the stanchion 10 of the cabinet is carried out in a particularly quick and simple manner, without any use of screws or similar fasteners. It also clearly emerges that such an attachment proves to be very stable and firm since it takes place on two orthogonal planes (ie. those of the two surfaces 18, 19) and in three different points (ie. in correspondence of the two apertures 14 and the aperture 15). A possibly required disassembly of a hinge, for instance to reposition the door at a different height or to carry out maintenance work on apparatuses that are contained in the cabinet, is similarly very simple and quickly made. It in fact only requires the portion 49 of the elastic fastening strap 40, which is elastically and unilaterally deformable, to be disengaged from the aperture 15, and then to go over the various above described assembly operations in the reverse sequence.

It will be appreciated that different embodiments and variants of the present invention, obviously as defined in the claims, are likely to be developed.

## Claims

1. Metal cabinet to accomodate electric control and switching apparatuses, constituted by modular component parts that are capable of being assembled directly also on the site of installation, and closed on its front side by at least a door (6) comprised between two front stanchions (9, 10) obtained by correspondingly folding the panels that form the side walls (2, 3) of the cabinet, wherein said door (6) has its hinges (20) attached to a first stanchion (10) through fastening means (38, 39, 40, 41, 42) that are solely adapted to realize sliding-type joints and abuts against the second stanchion (9), ***characterized in that*** a portion of said fastening means is constituted by elastically and unilaterally deformable elements (40) in direct engagement with a part of the said stanchion (10), whereas the remaining fastening means are constituted by rigid elements (38, 39, 41, 42) which are in direct engagement with a different part of the same stanchion.

2. Metal cabinet according to claim 1, ***characterized in that*** said first stanchion (10) has at least a surface (19) which is provided with two sets of apertures (14, 15) in such a way to be the part directly engaged by said rigid fastening elements (38, 39, 41, 42) of the hinges (20).

3. Metal cabinet according to claim 2, ***characterized in that*** said rigid fastening elements for the attachment of each hinge (20) to said stanchion (10) comprise two appendixes (41, 42) and two tabs (38, 39) arranged on one side (23) of the same hinge (20), so that surface (19) of the stanchion (10), which is provided with said two sets of apertures (14, 15), is clamped between the inner contours (45, 46) of said appendixes (41, 42) on one side and, the outer contours (43, 44) of said tabs (38, 39) on the other side.

4. Metal cabinet according to claim 2 or 3, ***characterized in that*** said elastically and unilaterally deformable elements (40) for fastening the hinge (20) are formed by an elastic fastening strap (40) having a first portion (48) that is hooked firmly onto a side (23) of the hinge (20) in correspondence of a first terminal fold (51) thereof, and a second portion (49) that rests unilaterally on the same side (23) of the hinge (20) and is provided with a fold (52) and a terminal edge (53) enabling it to engage an aperture (15) of the set of apertures provided in a second surface (18) of the stanchion (10), perpendicular to said first surface (19) of the same stanchion, which is the part of the stanchion (10) in direct engagement with said elastically and unilaterally deformable elements (40).

5. Metal cabinet according to any of the preceding claims 2 to 5, ***characterized in that*** each hinge (20) comprises two outer sides (21, 23) that are substantially parallel with respect to each other, and a joining portion (22) between said two sides (21, 23) so as to assume a Z-shaped configuration.

## Patentansprüche

1. Metallschrank für die Aufnahme elektrischer Steuer- und Schaltvorrichtungen, bestehend aus modularen Komponententeilen, welche auch direkt am Installationsort zusammengebaut werden können, und der an seiner Vorderseite mindestens von einer Tür (6) verschlossen ist, die zwischen zwei Pfosten (9, 10) angeordnet ist, welche durch entsprechendes Falten der Platten erhalten werden, welche die Seitenwände (2, 3) des Schranks bilden, wobei die Tür (6) ihre Scharniere (20) an einem ersten Pfosten (10) mittels Befestigungseinrichtungen (38, 39, 40, 41, 42) befestigt hat, welche lediglich für die Realisierung von Gleitverbindungen ausgelegt sind, und gegen den zweiten Pfosten (9) anliegt, **dadurch gekennzeichnet, daß** ein Abschnitt der Befestigungseinrichtung von elastisch und einseitig verformbaren Elementen (40) in direktem Eingriff mit einem Teil des Pfostens (10) gebildet wird, während die restlichen Befestigungseinrichtungen von starren Elementen (38, 39, 41, 42) gebildet werden, welche in einem direkten Eingriff mit einem anderen Teil desselben Pfostens stehen.

2. Metallschrank nach Anspruch 1, **dadurch gekennzeichnet, daß** der erste Pfosten (10) mindestens eine Oberfläche (19) aufweist, welche mit zwei Sätzen von Öffnungen (14, 15) in einer solchen Weise versehen ist, daß sie der direkt von den starren Befestigungselementen (38, 39, 41, 42) des Schamiers (20) erfaßte Teil ist.

3. Metallschrank nach Anspruch 2, **dadurch gekennzeichnet, daß** die starren Befestigungselemente für die Befestigung jedes Scharniers (20) an dem Pfosten (10), zwei Ansätze (41, 42) and zwei Streifen (38, 39) umfassen, die an einer Seite (23) des Scharniers (20) so angeordnet sind, daß die Oberfläche (19) des Pfostens (10), welcher mit zwei Sätzen von Öffnungen (14, 15) versehen ist, zwischen den Innenkonturen (45, 46) der Ansätze (41, 42) auf einer Seite and den Außenkonturen (43, 44) der Streifen (38, 39) auf der anderen Seite geklemmt wird.

4. Metallschrank nach Anspruch 2 oder 3, **dadurch gekennzeichnet, daß** die elastisch und einseitig verformbaren Elemente (40) für die Befestigung des Scharniers (20) aus elastischen Befestigungsfederbügeln (40) geformt sind, mit einem ersten Abschnitt (48), der fest auf eine Seite (23) des Scharniers (20) entsprechend einer ersten Endfalzung (51) davon eingehakt ist, und einem zweiten Abschnitt (49), der einseitig auf derselben Seite (23) des Scharniers (20) aufliegt, und mit einer Faltung (52) und einer Endkante (53) versehen ist, welche ihm ermöglichen in eine Öffnung (15) des Satzes der Öffnungen einzugreifen, die in einer zweiten Oberfläche (18) des Pfostens (10) senkrecht zu der ersten Oberfläche (19) desselben Pfostens vorgesehen sind, welcher der Teil des Pfostens (10) in direktem Eingriff mit den elastisch und einseitig verformbaren Elementen (40) ist.

5. Metallschrank nach einem der vorstehenden Ansprüche 2 bis 4 **dadurch gekennzeichnet, daß** jedes Scharnier (20) zwei Außenseiten (21, 23), die im wesentlichen zueinander parallel sind, und einen Verbindungsabschnitt (22) zwischen den zwei Seiten (21, 23) umfaßt, um so eine Z-förmige Konfiguration anzunehmen.

## Revendications

1. Armoire métallique devant loger des dispositifs de commande et de commutation électriques, constituée par des composants modulaires susceptibles d'être assemblés directement, également sur le site d'installation, et fermée sur sa face frontale par au moins une porte **(6),** montée entre deux colonnes avant **(9, 10)** obtenues par pliage en conformité avec les panneaux qui en forment les parois latérales **(2, 3),** dans laquelle les charnières **(20)** de ladite porte **(6)** sont fixées à une première colonne **(10),** par l'intermédiaire de moyens de fixation **(38, 39, 40, 41, 42)** uniquement adaptés pour réaliser des joints de type coulissant et venant en butée contre la deuxième colonne **(9),** une partie desdits moyens de fixation étant constituée par des éléments **(40)** déformables élastiquement et unilatéralement, reliés directement à une partie de ladite colonne **(10),** tandis que les autres moyens de fixation sont constitués par des éléments **(38, 39, 40, 41, 42)** rigides, reliés directement à une partie différente de la même colonne.

2. Armoire métallique selon la revendication 1, **caractérisée en ce que** ladite première colonne **(10)** a au moins une surface **(19)** munie de deux jeux d'ouverture **(14, 15)** de manière à former la partie reliée directement aux éléments de fixation **(38, 39, 41, 42)** rigides des charnières **(20).**

3. Armoire métallique selon la revendication 2, **caractérisée en ce que** lesdits éléments de fixation rigides, prévus pour la fixation de chaque charnière **(20)** sur ladite colonne **(10),** sont constitués de deux appendices **(41, 42)** et de deux pattes **(38, 39)** agencées sur un côté **(23)** de la même charnière **(20),** de manière que la surface **(19)** de la colonne **(10)** qui est munie desdits jeux d'ouverture **(14, 15),** soit enserrée entre les contours **(45, 46)** desdits appendices **(41, 42),** sur un côté, et les contours extérieurs **(43, 44)** desdites pattes **(38, 39),** sur l'autre côté.

4. Armoire métallique selon la revendication 2 ou 3, **caractérisée en ce que** lesdits éléments **(40)** déformables élastiquement et unilatéralement pour fixer la charnière **(20),** sont formés par une languette de fixation **(40)** élastique ayant une première partie **(48),** accrochée fermement sur un côté **(23)** de la charnière **(20)** en correspondance avec un premier pli terminal **(51)** de celle-ci, et une deuxième partie **(49),** reposant unilatéralement sur le même côté **(23)** de la charnière **(20)** et munie d'un pli **(52)** à un bord terminal **(53),** lui permettant de venir en prise avec une ouverture **(15)** du jeu d'ouverture, ménagée dans une deuxième surface **(18)** de la colonne **(10),** perpendiculairement à ladite première surface **(19)** de la même colonne, formant la partie de la colonne **(10)** reliée directement auxdits éléments **(40)** déformables élastiquement et unilatéralement.

5. Armoire métallique selon l'une quelconque des revendications 2 à 5 précédentes, **caractérisée en ce que** chaque charnière **(20)** comprend deux côtés extérieurs **(21, 23)** sensiblement parallèles l'un à l'autre, et une partie de jonction **(22)** entre lesdits deux côtés **(21, 23),** de façon à prendre une configuration en forme de Z.
